# NEUE EUROPÄISCHE PATENTSCHRIFT

(11) **EP 0 608 803 B2**
(45) Veröffentlichungstag und Bekanntmachung des Hinweises auf die Entscheidung über den Einspruch: **16.07.2003**
(45) Hinweis auf die Patenterteilung: 09.04.1997
(21) Anmeldenummer: 94100961.5
(22) Anmeldetag: 24.01.1994
(51) Int. Cl.: A47J 31/00, A47J 31/40

(54) **Automatische Kaffeemaschine für ein allein bzw. zusammen mit Milch als Kaffee mit einem Schuss Milch lieferbares Kaffeegetränk**
Automatic coffee machine for either making coffee or coffee mixed with a small amount of milk
Machine automatique pour faire soit du café tout seul, ou du café pourvu d'une petite portion de lait

(30) Priorität: 27.01.1993 IT MI930058 U
(43) Veröffentlichungstag der Anmeldung: 03.08.1994
(73) Patentinhaber: CIMBALI S.p.A., I-20082 Binasco (MI) (IT)
(72) Erfinder: Locati, Santino, Milano (IT)
(74) Vertreter: Jaumann, Paolo

(56) Entgegenhaltungen:
- EP-A- 0 164 660
- EP-A- 0 371 222
- WO-A-91/00041
- DE-A- 3 346 280
- DE-C- 3 506 781
- DE-C- 3 512 880
- US-A- 3 586 214
- US-A- 4 919 041

## Beschreibung

Die vorliegende Erfindung bezieht sich auf eine automatische Kaffeemaschine für ein in einer Aufgusskammer zubereitetes und entweder allein oder zusammen mit Milch als Cappuccino lieferbares Kaffeegetränk.

Bei bekannten Automaten dieser Art (siehe die Druckschrift WO-A-9100041), wird nach der Lieferung von Cappuccino eine Ausgabe von lediglich Kaffee verlangt, so kann es vorkommen, dass einige Mifchfropfen in die Tasse gelangen, in welche der Kaffee ausgelassen wird.

Die vorliegende Erfindung verfolgt nun hauptsächlich den Zweck, diesen Nachteil zu vermeiden.

Diese und weitere Zwecke und Vorteile der vorliegenden Erfindung, die der nachstehenden Beschreibung entnehmbar sind, werden im wesentlichen dadurch erzielt, dass eine Station zur Lieferung von lediglich Kaffee vorgesehen ist, welche von der Station zur Lieferung von Cappuccino örtlich getrennt ist, wobei die Lieferung von aus der Aufgusskammer kommenden Kaffee über eine zwei Arbeitsstellungen aufweisende Weiche erfolgt welche den von der Aufgusskammer kommenden Kaffee in ihrer einen Stellung der Station zur Lieferung von lediglich Kaffee und in ihrer andaren Stellung der Station zur Lieferung von Cappuccino zuführt.

in einer besonders vorteilhaften Ausführungsform ist die Weiche als ein angelenktes, jeweils wahlweise in eine seiner beiden Arbeitsstellungen schwenkbares Glied ausgebildet.

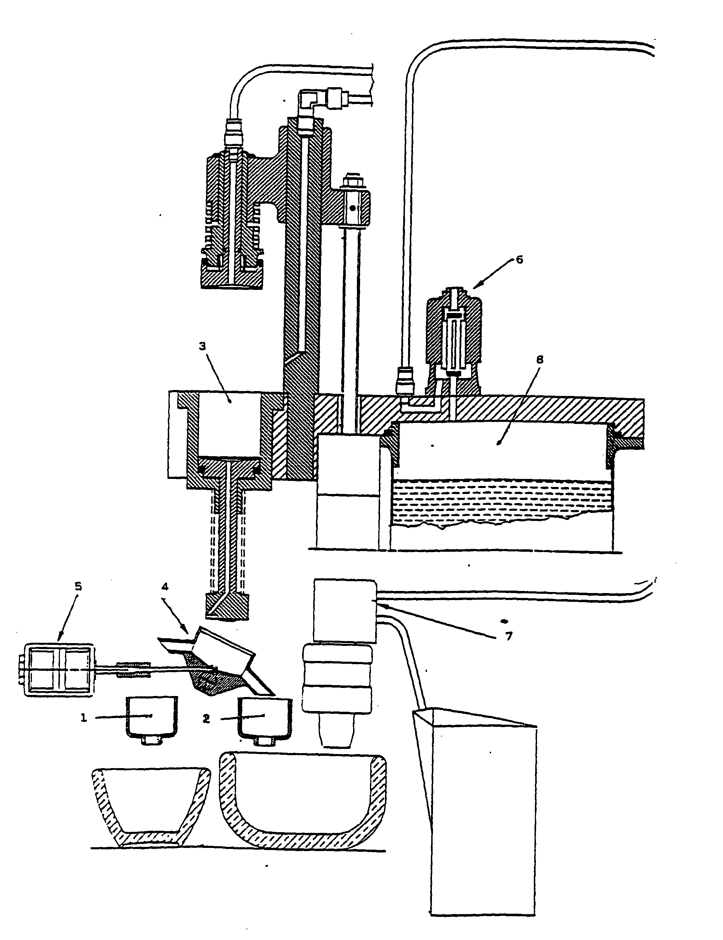

in der beiliegenden Zeichnung ist ein Ausführungsbeispiel der vorliegenden Erfindung, auf welches letztere allerdings nicht beschrankt ist, schematisch dargestellt.

Die Zeichnung zeigt schematisch das Lielersystem für Milch und einen Endabschnitt des Liefersystems für Kaffee.

Durch Drücken eines entsprechenden (nicht dargestellten) Druchknopies wird das Arbeitsspiel für Cappuccino automatisch durchgeführt.

Mit Beginn des Arbeitsspiels für Cappuccino werden gleichzeitig das Magnetventil 6 und das Betatigungsglied 5 zur Betätigung der Kaffeeweiche 4 erregt.

Das Magnetventil 6 lässt im Kesselraum 8 enthaltenen, unter Druck stehenden Wasserdampf dem Milchaufzug 7 zufliessen, welcher, unter Ausnützung des Venturi-Elfektes, Milch aus einem Milchvorratsbehälter saugt, erwärmt und mit Luft vermischt und damit die typische Emulsion für Cappuccino nach italienischer Art bildet.

Das Betätigungsglied 5, nachdem es die Weiche 4 in die gezeichnete Stellung gebracht (bzw. in dieser Stellung gehalten) hat, ermöglicht dem aus der Aufgusskammer 3 kommenden Kaffee sich in ein- und derselben Tasse mit der emulgierten Milch zu vereinigen.

Wird dagegen der (ebenfalls nicht dargestellte) Druckknopf für die Lieferung von lediglich Kaffee gedrückt, 50 verschwenkt das Setätigungsglied 5 die Weiche 4 in deren andere Arbeitsstetlung (bzw. hält die Weiche in der anderen Arbeitsstellung) und es wird automatisch das Arbeitsspiel für lediglich Kaffee durchgeführt.

Die Weiche 4 ermöglicht demnach die Bildung zweier voneinander örtlich getrennten Entnahmestellen für die Getränke (Stelle 1 für Kaffee, Stelle 2 für Cappuccino), so dass bei Wahl von "lediglich" Kaffee ein Nachtropien von Milch wirkungsvoll vermieden wird.

## Patentansprüche

1. Automatische Kaffeemaschine für ein in einer Aufgusskammer (3) zubereitetes und entweder allein oder zusammen mit Milch als Cappuccino lieferbares Kaffeegetränk, **gekennzeichnet durch** eine von der Station (2) zur Lieferung von Cappuccino örtlich getrennte Station (1) zur Lieferung von lediglich Kaffee, wobei die Lieferung von aus der Aufgusskammer (3) kommenden Kaffee über eine zwei Arbeitsstellungen aufweisende Weiche (4) erfolgt, die den von der Aufgusskammer (3) kommenden Kaffee in ihrer einen Stellung der Station (1) zur Lieferung von lediglich Kaffee und in ihrer anderen Stellung der Station (2) zur Lieferung von Cappuccino zuführt.

2. Kaffeemaschine nach Anspruch 1, **dadurch gekennzeichnet dass** die Weiche (4) als ein angelenktes, jeweils wahlweise in eine seiner beiden Arbeitsstellungen schwenkbares Glied ausgebildet ist.

## Claims

1. Automatic coffee machine for a coffee drink which is prepared in an infusion chamber (3) and can be supplied either on its own or together with milk with as cappuccino , **characterized by** a station (1) which is intended for supplying coffee on its own and is at a different location from the station (2) for supplying cappuccino, where the supply of coffee, coming from the infusion chamber (3) takes place via a diverter (4) , which has two operating positions, in one position feeds said coffee to the station (1) for supplying coffee on its own and, in its other position, feeds said coffee to the station (2) for supplying cappuccino.

2. Coffee machine according to claim 1, **characterized in that** the diverter (4)is designated as an articulated element which can be pivoted optionally in each case into one of its two operating positions.

## Revendications

1. Machine à café automatique pour un café préparé dans une chambre à infusion(3) et pouvant être livré soit tout seul, soit avec du lait en tant que cappuccino, **caractérisée par** une station (1) pour la livraison de café seulement située à un emplacement différent de la station (2) pour la livraison de cappuccino, de façon que la livraison de café venant de la chambre à infusion (3) présentant deux positions de travail, lequel aiguillage, dans une de ses positions, amène le café venant de la chambre à infusion (3) à la station (1) pour la livraison de café seulement et, dans son autre position, l'amène à la station (2) pour la livraison de cappuccino.

2. Machine à café selon la revendication 1 **caractérisée en ce que** l'aiguillage (4) est exécuté en tant qu'élément articulé que l'on peut faire pivoter, de manière facultative, dans l'une ou l'autre de ses deux positions de travail.
